(19) Europäisches Patentamt
European Patent Office
Office européen des brevets

(11) **EP 1 287 646 B1**

(12) **EUROPÄISCHE PATENTSCHRIFT**

(45) Veröffentlichungstag und Bekanntmachung des Hinweises auf die Patenterteilung:
**28.12.2011 Patentblatt 2011/52**

(21) Anmeldenummer: **01925515.7**

(22) Anmeldetag: **30.03.2001**

(51) Int Cl.:
**H04L 12/56** (2006.01)

(86) Internationale Anmeldenummer:
**PCT/EP2001/003671**

(87) Internationale Veröffentlichungsnummer:
**WO 2001/095575 (13.12.2001 Gazette 2001/50)**

(54) **VERFAHREN ZUR BEREITSTELLEN VON ZEITSCHLITZEN IN EINEM RAHMEN FÜR DIE ÜBERTRAGUNG VON INFORMATIONEN**

METHOD FOR THE PREPARATION OF TIMESLOTS WITHIN A FRAME FOR THE TRANSMISSION OF INFORMATION

PROCEDE DE PREPARATION D'INTERVALLES TEMPORELS DANS UN CADRE POUR LA TRANSMISSION D'INFORMATIONS

(84) Benannte Vertragsstaaten:
**AT ES FR GB IT**

(30) Priorität: **02.06.2000 DE 10027595**

(43) Veröffentlichungstag der Anmeldung:
**05.03.2003 Patentblatt 2003/10**

(73) Patentinhaber: **ALSTOM GmbH**
**68309 Mannheim (DE)**

(72) Erfinder:
• **FRANZ, Walter**
 **89608 Griesingen (DE)**
• **SCHWAB, Martin**
 **89075 Ulm (DE)**
• **MALY, Horst**
 **89171 Illerkirchberg (DE)**

(74) Vertreter: **Dreiss**
**Patentanwälte**
**Postfach 10 37 62**
**70032 Stuttgart (DE)**

(56) Entgegenhaltungen:
**EP-A- 0 993 214  US-A- 5 886 993**
**US-A- 5 953 321**

## Beschreibung

Die Erfindung geht aus von einem Verfahren zum Bereitstellen von Zeitschlitzen in einem Rahmen für die Übertragung von Informationen zur Steuerung eines industriellen Transportsystems mit mobilen Einheiten und mit einer Zentraleinheit, wobei der Rahmen mindestens einen Zeitschlitz aufweist, der für die Übertragung von Informationen von den mobilen Einheiten zu der Zentraleinheit vorgesehen ist, und in den mehrere der mobilen Einheiten gleichzeitig Informationen zur überrragung einschreiben können. Die Erfindung betrifft ebenfalls ein System und eine Zentraleinheit zum entsprechenden Bereitstellen von Zeitschlitzen.

Derartige Verfahren sind beispielsweise aus der US 5,886,993 als sogenannte Zugriffsprotokolle bekannt und haben die Aufgabe, die begrenzte Kapazität des Übertragungskanals unter einer Vielzahl von Teilnehmern nach vorgebbaren Regeln zu verteilen. Ein Problem, das dabei von diesen Zugriffsprotokollen gelöst werden muß, ist die Auflösung von Kollisionen, die entstehen können, wenn mehrere der mobilen Einheiten gleichzeitig Informationen in den einen Zeitschlitz zur Übertragung einschreiben.

Aufgabe der Erfindung ist es, ein Verfahren bereitzustellen, mit dem das vorstehend genannte Problem möglichst effektiv gelöst wird.

Die Erfindung läst diese Aufgabe durch ein Verfahren nach dem Anspruch 1.

Bei einem System und einer Zentraleinheit der eingangs genannten Art wird die Aufgabe erfindungsgemäß durch die Ansprüche 9 und 10 gelöst.

Der Vorteil des erfindungsgemäßen Zugriffsprotokolls besteht darin, daß in einem nachfolgenden Rahmen aufgrund der Erhöhung der Anzahl der entsprechenden Zeitschlitze die Wahrscheinlichkeit einer Kollision wesentlich vermindert ist. Die in dem aktuellen Rahmen vorhandene Kollision von Informationen wird also erfindungsgemäß mit hoher Wahrscheinlichkeit wieder aufgelöst.

Das erfindungsgemäße Zugriffsprotokoll eignet sich besonders vorteilhaft zur Übertragung spontaner, zeitkritischer, einzeln auftretender Informationen bzw. Datenblöcke. Die Erfindung unterscheidet sich damit grundlegend von bekannten Funksystemen, die auf die Übertragung von großen Dateien oder Sprache oder dergleichen ausgerichtet sind.

Bei der Erfindung wird eine Wahrscheinlichkeit festgelegt, mit der eine mobile Einheit auf einen der Zeitschlitze zugreifen darf, und es wird die Wahrscheinlichkeit vermindert, wenn die Anzahl der benötigten Zeitschlitze einen vorgegebenen Grenzwert überschreiten würde. Auf diese Weise wird erreicht, daß auch bei Kollisionen, die nach einer Erhöhung der Anzahl der entsprechenden Zeitschlitzen auf den vorgegebenen Grenzwert noch auftreten, in dem nachfolgenden Rahmen eine Möglichkeit vorhanden ist, die Wahrscheinlichkeit weiterer Kollisionen weiter zu vermindern.

Bei einer vorteilhaften Weiterbildung der Erfindung wird die Anzahl erfolgreicher Übertragungen von Informationen in den Zeitschlitzen erfaßt, und es wird die Wahrscheinlichkeit vermindert, wenn eine erste Bedingung erfüllt ist, welche die Summe aus erkannten Kollisionen und erkannten erfolgreichen Übertragungen berücksichtigt. Entsprechend wird die Wahrscheinlichkeit erhöht, wenn die Summe aus erkannten Kollisionen und erkannten erfolgreichen Übertragungen eine vorgegebene zweite Bedingung erfüllt, beispielsweise einen Grenzwert unterschreitet.

Besonders vorteilhaft ist es, wenn den Informationen unterschiedliche Prioritäten zugeordnet sind, und wenn den verschiedenen Prioritäten nacheinander und unabhängig voneinander Zeitschlitze in dem Rahmen zur Verfügung gestellt werden. Auf diese Weise ist das erfindungsgemäße Zugriffsprotokoll dazu geeignet, eine Mehrzahl verschiedener Prioritäten zu unterstützen.

Besonders zweckmäßig ist es, wenn für Informationen einer bestimmten Priorität mindestens ein Zeitschlitz bereitgestellt wird, wenn in dem Rahmen ein Zeitschlitz für Informationen einer niedrigeren Priorität vorhanden ist. Damit wird gewährleistet, daß ein Endgerät in jedem Fall eine Information mit einer höheren Priorität übertragen kann.

Von besonderer Bedeutung ist die Realisierung des erfindungsgemäßen Verfahrens in der Form eines Steuerelements, das für eine der mobilen Einheiten oder für die Zentraleinheit vorgesehen ist. Dabei ist auf dem Steuerelement ein Programm abgespeichert, das auf einem Rechengerät, insbesondere auf einem Mikroprozessor, ablauffähig und zur Ausführung des erfindungsgemäßen Verfahrens geeignet ist. In diesem Fall wird also die Erfindung durch ein auf dem Steuerelement abgespeichertes Programm realisiert, so daß dieses mit dem Programm versehene Steuerelement in gleicher Weise die Erfindung darstellt wie das Verfahren, zu dessen Ausführung das Programm geeignet ist. Als Steuerelement kann insbesondere ein elektrisches Speichermedium zur Anwendung kommen, beispielsweise ein Flash-Memory oder ein Read-Only-Memory.

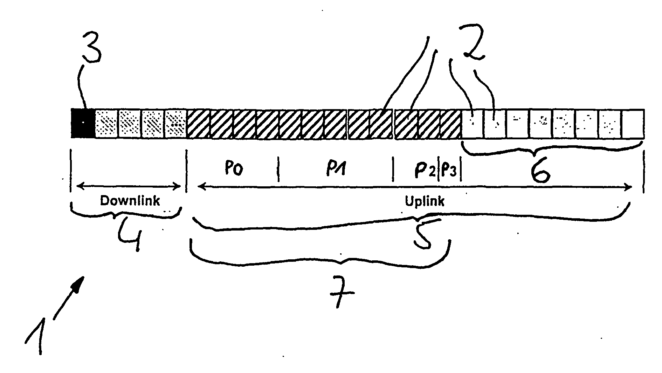

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

Die einzige Figur der Zeichnung zeigt eine schematische Darstellung eines Ausführungsbeispiels eines erfindungsgemäßen Rahmens zur Aufnahme von zu übertragenden Informationen.

Die Erfindung wird nachfolgend am Beispiel eines spurgeführten industriellen Transportsystems erläutert. Dabei kann es sich beispielsweise um ein Gepäck-Verteilsystem auf einem Flughafen handeln. Die Erfindung ist jedoch auch bei anderen technischen Systemen mit mobilen Einheiten einsetzbar.

Bei einem spurgeführten Transportsystem ist ein Schienensystem vorhanden, auf dem sich führerlose Transportvehikel weitgehend beliebig bewegen können.

Das Schienensystem weist Weichen und Kreuzungen auf und kann sich innerhalb und außerhalb von Gebäuden befinden. Jedes Transportvehikel ist mit einem Elektromotor versehen, der über das Schienensystem mit Energie versorgt wird. Die Energieübertragung von dem Schienensystem auf das Transportvehikel ist dabei vorzugsweise berührungslos ausgebildet.

Jedes Transportvehikel ist weiterhin mit einem Rechner versehen, der zur Ermittlung der Route sowie zur Steuerung der Bewegung des Transportvehikels innerhalb des Schienensystems vorgesehen ist. Unter der Bewegung des Transportvehikels wird dabei dessen Geschwindigkeit, Abbremsen, Beschleunigen, und dergleichen verstanden.

Die Bewegungen der Transportvehikel innerhalb des Schienensystems werden derart miteinander koordiniert, daß sich keine Kollisionen der Transportvehikel ereignen. Zu diesem Zweck ist jedes Transportvehikel mit einem Sende-/ Empfangssystem versehen, das eine Kommunikation mit anderen Transportvehikeln ermöglicht.

Die Kommunikation zwischen den Transportvehikeln erfolgt dabei vorzugsweise über das Schienensystem. Hierzu sind in die einzelnen Schienenstränge Leckwellenleiter integriert, so daß das gesamte Schienensystem als Antenne wirkt. Die Sende-/Empfangssysteme der einzelnen Transportvehikel sind ebenfalls mit jeweils einer Antenne versehen, so daß sie von dem Schienensystem abgestrahlte Informationen empfangen und ebenfalls Informationen an das als Antenne wirkende Schienensystem senden können.

Die Kommunikation zwischen den Transportvehikeln ist zentral organisiert. Hierzu ist ein zentraler Rechner, nachfolgend als Master bezeichnet, vorgesehen. Dieser Master ist ortsfest vorgesehen, kann aber auch einem der Transportvehikel zugeordnet sein. Die Rechner der einzelnen Transportvehikel werden nachfolgend als Endgeräte bezeichnet.

Für die Übermittlung einer Information von einem ersten Endgerät zu einem zweiten Endgerät ist es erforderlich, daß die Information zuerst von dem ersten Endgerät an den Master und dann von dem Master an das zweite Endgerät übermittelt wird. Die Übertragung einer Information von einem Endgerät an den Master wird nachfolgend als Uplink bezeichnet und die Übertragung einer Information von dem Master an eines der Endgeräte als Downlink.

Zur Organisation des Uplink und des Downlink ist die kontinuierlich vorhandene Übertragungszeit in sogenannte Rahmen aufgeteilt. Innerhalb von jedem Rahmen werden Informationen von dem Master an die Engeräte und von den Endgeräten an den Master übertragen. Die einzelnen Rahmen folgen zeitlich einander. Ein derartiger Rahmen 1 ist in der Figur dargestellt. Der Rahmen 1 besitzt beispielsweise eine Zeitdauer von 10 ms.

Der Rahmen 1 ist in eine Anzahl von Zeitschlitzen aufgeteilt, die nachfolgend kurz als Slots 2 bezeichnet werden. Die Anzahl der Slots 2 pro Rahmen 1 kann fest sein, beispielsweise 16. Die Anzahl kann aber auch variabel sein. In die einzelnen Slots 2 können von dem Master und von den Endgeräten die zu übertragenden Informationen eingespeist werden.

Die Informationen für die einzelnen Slots 2 des Rahmens 1 werden von dem Master und von den Endgeräten erzeugt und im Zeitpunkt der entsprechenden Slots 2 an das als Antenne wirkende Schienensystem versendet. Der jeweilige Empfänger kann dann die für ihn relevanten Informationen empfangen und weiterverarbeiten.

Der Slot 3 eines Rahmens 1 dient der Rahmensteuerung und wird noch näher erläutert werden. Der Slot 3 wird von dem Master erzeugt.

Eine erste Anzahl der nachfolgenden Slots 2 ist für den Downlink 4 vorgesehen, während eine zweite Anzahl von Slots 2 dem Uplink 5 zugeordnet ist. Die Slots 2 für den Downlink 4 und den Uplink 5 können auch anders als in der Figur innerhalb des Rahmens 1 angeordnet sein. Entsprechendes kann ggf. auch für den Slot 3 der Fall sein.

Die Slots 2 stellen eine logische Sichtweise dar. Es ist möglich und in der Regel auch sinnvoll, alle Informationen bzw. Datenblöcke, die im allgemeinen an verschiedene Endgeräte adressiert sind, in ein Funkpaket zu kodieren und in einem Funkvorgang zu senden. Die empfangenden Endgeräte dekodieren und stellen dann die Slot-Struktur wieder her.

In den Slots 2 für den Downlink 4 werden Informationen von dem Master an die Endgeräte übertragen. Jedem Endgerät ist zu diesem Zweck eine Adresse zugeordnet. In jedem Slot 2 für den Downlink 4 ist die Adresse desjenigen oder derjenigen Endgeräte enthalten, für die die in dem Slot 2 enthaltene Information bestimmt ist. Diese Adressen einschließlich der zugehörigen, zu übertragenden Information werden von dem Master in den jeweils relevanten Slot 2 eingeschrieben. Jedes Endgerät kann daraufhin anhand der Adresse diejenigen Informationen erkennen und empfangen, die für das jeweilige Endgerät bestimmt sind.

In den Slots 2 für den Uplink 5 werden Informationen von den Endgeräten an den Master übertragen. Ein Teil 6 der Slots 2 für den Uplink 5 sind bestimmten Endgeräten zugeordnet. Dies wird mit Hilfe der im Downlink übertragenen Informationen zur Rahmensteuerung erreicht. In diesen, z.B. zu Beginn des Downlinks übertragenen Slot 3 schreibt der Master die Adressen derjenigen Endgeräte ein, für die ein Slot 2 im Uplink 5 reserviert ist. Der Master schreibt in den Slot 3 ebenfalls denjenigen Slot 2 des Teils 6 des Uplink 5 ein, der für das jeweilige Endgerät reserviert ist. Die Endgeräte können daraufhin den Slot 3 überprüfen und feststellen, welcher Slot 2 für welches Endgerät reserviert ist. Daraufhin kann das jeweilige Endgerät in den vorbestimmten Slot 2 diejenige Information einschreiben, die das Endgerät an den Master übertragen will.

Ein weiterer Teil 7 der Slots 2 für den Uplink 5 ist keinem bestimmten Endgerät zugeordnet. Statt dessen können diese Slots 2 von allen Endgeräten zur Übermittlung von Informationen verwendet werden. Für den Zugriff auf diese Slots 2 ist jedoch eine Priorität ausschlaggebend.

Den zu übertragenden Informationen sind entsprechend ihrer Bedeutung unterschiedliche Prioritäten zugeordnet. Eine Alarmmeldung, z.B. der Ausfall eines Transportvehikels, besitzt die höchste Priorität "P0". Informationen, die zur Steuerung der Bewegungen der Transportvehikel erforderlich sind, also z.B. Informationen zur Klärung der Vorfahrt an einer Kreuzung, besitzen die nächste Priorität "P1". Weiterhin können Informationen noch mit den nächstniedrigeren Prioritäten "P2" und "P3" versehen werden, z.B. Informationen, die nur zu statistischen Zwecken übermittelt werden, nicht-zeitkritische Fahraufträge oder dergleichen.

Jedem Slot 2 des Teils 7 für den Uplink 5 ist eine der vorstehenden Prioritäten zugeordnet. Die Anzahl von Slots 2 für jede der Prioritäten wird noch beschrieben werden. Die Anzahl kann auch Null sein, so daß z.B. für eine niedrige Priorität kein Slot 2 vorhanden ist.

Jeder Information ist wie gesagt eine Priorität zugeordnet. Will ein erstes Endgerät eine Information an ein zweites Endgerät übertragen, so ist dem ersten Endgerät die Priorität der zu übertragenden Information bekannt. Zur Übertragung der Information fordert das erste Endgerät einen Slot 2 innerhalb des Uplink 5 bei dem Master an. Diese Anforderung wird von dem ersten Endgerät in eines derjenigen Slots 2 des Teils 7 des Uplinks 5 eingeschrieben, das die Priorität der zu übertragenden Information besitzt.

Ist kein Slot mit dieser Priorität vorhanden, so kann die Anforderung in dem aktuellen Rahmen 1 nicht abgesetzt werden und das Endgerät versucht im nächsten Rahmen erneut, die Anforderung an den Master zu übermitteln.

Der Master überprüft alle Slots 2 des Teils 7 des Uplinks 5. Es sei nun angenommen, daß nur das vorstehend genannte erste Endgerät eine Anforderung in ein der Priorität entsprechendes Slot 2 des Teils 7 eingeschrieben hat. Der Master erkennt diese Anforderung und reserviert dann in dem nächsten Rahmen 1 einen Slot 2 in dem Teil 6 des Uplinks 5 speziell für dasjenige Endgerät, das die Anforderung abgesetzt hat. Dieses Endgerät kann dann in dem nächsten Rahmen 1 die zu übertragende Information an den Master übermitteln.

Der Master leitet die Information in dem übernächsten oder einem noch späteren Rahmen 1 in einem der Slots 2 für den Downlink 4 an das zweite Endgerät weiter, für das die Information bestimmt ist. Die Übermittlung der Information von dem ersten Endgerät an das zweite Endgerät ist damit abgeschlossen.

Es besteht nun die Möglichkeit, daß in demselben Zeitpunkt eine Mehrzahl von Endgeräten eine Information gleicher Priorität an ein anderes Endgerät versenden wollen. Dies kann dazu führen, daß in demselben Zeitpunkt mehrere Anforderungen von verschiedenen Endgeräten in denselben Slot 2 des Teils 7 für den Uplink 5 eingeschrieben werden. Dies stellt einen Kollisionsfall dar.

In einem derartigen Kollisionsfall ist der Master nicht mehr in der Lage, die in dem mehrfach überschriebenen Slot 2 enthaltenen Anforderungen zu erkennen. Der Master ist nur noch in der Lage zu erkennen, daß ein Kollisionsfall vorliegt, daß also mehrere Endgeräte Informationen mit derselben Priorität übertragen wollen. Dieser Kollisionsfall muß von dem Master aufgelöst werden.

Hierzu sind bei dem Master die folgenden Parameter für jede der Prioritäten P0, P1, P2, P3 vorhanden:

N = Anzahl der Slots 2 innerhalb des Teils 7 für den Uplink 5 für jede der Prioritäten P0, P1, P2, P3,
Nm = Grenzwert für N für jede Priorität,
p = Wahrscheinlichkeit, daß ein Endgerät auf einen der N Slots 2 des Teils 7 der jeweiligen Priorität zugreift,
r = Faktor für die Erhöhung oder die Verminderung von N und p für jede der Prioritäten P0, P1, P2, P3,
rm = Grenzwert für die Entscheidung, ob p verändert wird.

Der Master koordiniert den Zugriff auf die Slots 2 innerhalb des Teils 7 für den Uplink 5 nach folgenden Regeln:

Es wird nachstehend davon ausgegangen, daß ein Endgerät auf einen der zu einer Priorität zugehörigen Slots 2 ohne weiteres zugreifen kann. Dies bedeutet, daß die Wahrscheinlichkeit für einen derartigen Zugriff gleich Eins ist. Bei später beschriebenen Regeln wird diese Wahrscheinlichkeit verringert werden, so daß dieser Zugriff nicht mehr ohne weiteres erfolgen kann, sondern nur noch mit der Wahrscheinlichkeit p kleiner als Eins.

Ist - wie gesagt - für ein bestimmtes Endgerät die Wahrscheinlichkeit p, daß dieses Endgerät auf einen der zu einer bestimmten Priorität zugehörigen Slots 2 zugreift, gleich Eins, und treten in den zugehörigen Slots 2 des Teils 7 des Rahmens 1 für diese Priorität eine Anzahl n von Kollisionen auf, so gilt die folgende Gleichung (1):

$$N = \text{Minimum} (n \times r; Nm) \qquad (1).$$

Bei der vorstehenden Gleichung (1), wie auch bei nachfolgenden Gleichungen ist zu beachten, daß auf der linken Seite der Gleichung immer der Wert für den nächsten Rahmen 1 angegeben ist, während die rechte Seite der Gleichung immer von Werten des derzeit aktuellen Rahmens 1 ausgeht.

Ist für eine bestimmte Priorität in dem Teil 7 für den Uplink 5 z.B. nur ein einziger Slot 2 vorgesehen, so kann dort auch nur eine einzige Kollision auftreten. Die Anzahl n ist damit Eins. Ist als Beispiel r = 4 vorgesehen, so haben die vorstehenden Gleichungen zur Folge, daß die Anzahl N der Slots 2 innerhalb des Teils 7 für diese Priorität auf Vier erhöht wird. Dabei wird angenommen, daß Nm in jedem Fall größer als Vier ist.

Aufgrund der nunmehr in dem nächsten Rahmen 1 für die bestimmte Priorität vorhandenen vier Slots 2 ist die Gefahr einer Kollision wesentlich vermindert. Treten weiterhin Kollisionen auf, so wird die vorstehende Gleichung erneut angewendet. Tritt keine Kollision mehr auf, so wird die Anzahl N der Slots 2 innerhalb des Teils 7 für den Uplink 5 entsprechend der Gleichung (1) auf Null oder, wie noch ausgeführt werden wird, auf Eins gesetzt.

Ist die Wahrscheinlichkeit p weiterhin gleich Eins und übersteigt die Anzahl N den Grenzwert Nm, so wird die nachfolgende Gleichung (2) berücksichtigt:

$$p = p / r, \text{ wenn } n \times r > Nm \qquad (2).$$

In diesem Fall wird also - wie bereits angedeutet wurde - die Wahrscheinlichkeit p, daß ein Endgerät auf einen der N Slots 2 des Teils 7 der bestimmten Priorität zugreift, um den Faktor r erniedrigt. Diese geringere Zugriffswahrscheinlichkeit wird dadurch realisiert, daß jedes der Endgeräte ein Zufallsexperiment mit Hilfe eines Pseudozufallszahlengenerators durchführt, auf dessen Grundlage das Endgerät dann mit der Wahrscheinlichkeit p entscheidet, ob es auf den aktuellen Rahmen zugreift oder nicht.

Für die Wahrscheinlichkeit p kann ein unterer Grenzwert eingeführt werden, der nicht unterschritten werden darf. Dieser untere Grenzwert kann sich an der maximalen Anzahl von Transportvehikeln orientieren, die von dem Master verwaltet werden können, oder er kann sich an der Anzahl von Endgeräten orientieren.

Ist im aktuellen Rahmen 1 z.B. N = 4, p = 1, Nm = 10, r = 4 und n = 3, so wird die Anzahl N im nächsten Rahmen 1 auf N = Nm begrenzt und die Wahrscheinlichkeit p auf 1/4 reduziert.

Ist im aktuellen Rahmen die Wahrscheinlichkeit p gleich Eins und ist die Anzahl n der Kollisionen so, daß n × r ≤ Nm gilt, so wird die Wahrscheinlichkeit p des aktuellen Rahmens 1 auch im nächsten Rahmen 1 identisch beibehalten.

Ist im aktuellen Rahmen 1 die Wahrscheinlichkeit p kleiner als Eins, so wird im nächsten Rahmen 1 die Anzahl N immer auf den Grenzwert Nm gesetzt, und zwar unabhängig von der Gleichung (1).

Ist im aktuellen Rahmen 1 die Wahrscheinlichkeit p kleiner als Eins, so werden zusätzlich im nächsten Rahmen 1 folgende Gleichungen (3), (4) und (5) angewendet:

$$p = p / r, \text{ wenn } (n+s) > rm \times Nm \qquad (3)$$

$$p = p \times r, \text{ wenn } (n+s) < (1-rm) \times Nm \qquad (4)$$

$$p = p, \text{ in allen anderen Fällen} \qquad (5).$$

Dabei stellt s die Anzahl der kollisionsfreien Zugriffe auf die Slots 2 des Teils 7 der bestimmten Priorität dar.

Ist im aktuellen Rahmen 1 als Beispiel p = 1/16, r = 4, n = 0, s = 1, rm = 0,8 und Nm = 10, so ist die Bedingung der Gleichung (4) in der Form von (0+1) < (1-0,8)×10 erfüllt, und es wird die Wahrscheinlichkeit p im nächsten Rahmen 1 auf 1/4 erhöht.

Ist im aktuellen Rahmen 1 abweichend vom vorstehenden Beispiel aber n = 2, so ist weder die Bedingung der Gleichung (3), noch die Bedingung der Gleichung (4) erfüllt. Damit wird die Wahrscheinlichkeit p des aktuellen Rahmens 1 auch im nächsten Rahmen 1 beibehalten.

Der Master ermittelt die Anzahl N der Slots 2 innerhalb des Teils 7 für den Uplink 5 zuerst nach den vorstehenden Regeln für die höchste Priorität P0. Danach vergibt der Master diejenigen Slots 2 des Teils 6 für den Uplink 5, die einem Endgerät fest zugeordnet werden und die Priorität P0 besitzen.

Sofern noch Slots 2 für den Uplink 5 nicht vergeben und damit übrig sind, vergibt der Master diese Slots 2 für die nächstniedrige Priorität P1. Für diese Priorität P1 vergibt der Master dann ebenfalls die Slots 2 des Teils 6, also die fest zugeordneten Slots 2.

Danach wird dieses Verfahren für die Prioritäten P2 und P3 wiederholt, sofern noch Slots 2 vorhanden sind.

Bei diesem Vorgehen wird von dem Master berücksichtigt, daß für jede Priorität, die größer ist als die niedrigste, im aktuellen Rahmen 1 vorhandene Priorität, zumindest ein Slot 2 im Teil 7 für den Uplink 5 vorhanden sein muß. Dies hat zur Floge, daß z.B. für die höchste Priorität P0 die Anzahl N nie auf Null vermindert wird, sondern zumindest immer Eins bleibt. Bei der Priorität P2 kann jedoch die Anzahl N zu Null werden, wenn keine Slots 2 mit der niedrigeren Priorität P3 im Rahmen 1 vorhanden sind.

Des weiteren wird von dem Master berücksichtigt, daß, wenn eine niedrige Priorität das erste Mal wieder berücksichtigt wird, nachdem sie eine längere Zeitdauer keinen Slot 2 innerhalb des Teils 7 des Uplink 5 zugeordnet bekommen hat, die Anzahl N dieser niedrigen Priorität sofort auf Nm gesetzt wird. Zusätzlich kann in diesem Fall die Wahrscheinlichkeit p noch erniedrigt werden.

**Patentansprüche**

1. Verfahren zum Bereitstellen von Zeitschlinzen in einem Rahmen für die Übertragung von Informationen zur Steuerung eines industriellen Transportsystems mit mobilen Einheiten und mic einer Zentraleinheit,
   wobei der Rahmen mindestens einen Zeitschlitz aufweist, der für die Übertragung von Informationen von den mobilen Einheiten zu der Zentraleinheit vorgesehen ist, und in den mehrere der mobilen Einheiten gleichzeitig Informationen zur Übertragung einschreiben können, **dadurch gekennzeichnet, dass** eine Kollision von Informationen verschiedener mobiler Einheiten in demselben Zeitschlitz erkannt wird, dass nach einer erkannten Kollision die Anzahl dieser Zeitschlitze erhöht wird, dass eine Wahrscheinlichkeit festgelegt wird, mit der eine mobile Einheit auf einen der Zeitschlitze zugreifen darf, und dass die Wahrscheinlichkeit vermindert wird, wenn die Anzahl der benötigten Zeitschlitze einen vorgegebenen Grenzwert überschreiten würde.

2. Verfahren nach Anspruch 1, **dadurch gekennzeichnet, dass** die Anzahl der Zeitschlitze, auf die mehrere mobile Einheiten zugreifen können, entsprechend dem Grenzwert beibehalten wird, solange die Wahrscheinlichkeit kleiner als Eins ist.

3. Verfahren nach einem der Ansprüche 1 oder 2, **dadurch gekennzeichnet, dass** die Anzahl erfolgreicher Übertragungen von Informationen in den Zeitschlitzen erfasst wird, und dass die Wahrscheinlichkeit vermindert wird, wenn eine erste Bedingung erfüllt ist, welche die Summe aus erkannten Kollisionen und erkannten erfolgreichen Übertragungen berücksichtigt.

4. Verfahren nach Anspruch 3, **dadurch gekennzeichnet, dass** die Wahrscheinlichkeit erhöht wird, wenn die Summe aus erkannten Kollisionen und erkannten erfolgreichen Übertragungen eine vorgegebene zweite Bedingung erfüllt.

5. Verfahren nach einem der vorstehenden Ansprüche, wobei den Informationen unterschiedliche Prioritäten zugeordnet sind, **dadurch gekennzeichnet, dass** den verschiedenen Prioritäten nacheinander und unabhängig voneinander Zeitschlitze in dem Rahmen zur Verfügung gestellt werden.

6. Verfahren nach Anspruch 5, dadurch gekennzeichnec, dass für Informationen einer bestimmten Priorität mindestens ein Zeitschlitz bereitgestellt wird, wenn in dem Rahmen ein zeitschlitz für Informationen einer niedrigeren Priorität vorhanden ist.

7. Verfahren nach einem der Ansprüche 5 oder 6, **dadurch gekennzeichnet, dass** die Anzahl der zeitschlitze für Informationen einer bestimmten Priorität auf einen vorgegebenen Wert gesetzt wird, wenn diese Priorität eine längere Zeitdauer nicht mehr aufgetreten ist.

8. Steuerelelement, insbesondere Flash-Memory oder Read-Only-Memory, für ein Steuergerät einer der mobilen Einheiten oder der Zentraleinheit, auf dem ein Programm abgespeichert ist, das auf einem Rechengerät, insbesondere auf einem Mikroprozessor, ablauffähig und zur Ausführung der einzehnen Schritte eines Verfahrens nach einem der Ansprüche 1 bis 7 geeignet ist.

9. System zum Bereitstellen von Zeitschlitzen in einem Rahmen für die Übertragung von Informationen, mit mobilen Einheiten und mit einer Zentraleinheit, wobei der Rahmen mindestens einen Zeitschlitz aufweist, der für die Übertragung von Informationen von den mobilen Einheiten zu der Zentraleinheit vorgesehen ist, und in den mehrere der mobilen Einheiten gleichzeitig Informationen zur Übertragung einschreiben können, **dadurch gekennzeichnet, dass** Mittel zur Erkennung einer Kollision von Informationen verschiedener mobiler Einheiten in demselben Zeitschlitz vorhanden sind, dass Mittel zur Erhöhung der Anzahl dieser Zeitschlitze nach einer erkannten Kollision vorhanden sind, dass Mittel zur Festlegung einer wahrscheinlichkeit vorhanden sind, mit der eine mobile Einheit auf einen der Zeitschlitze zugreifen darf, und dass Mittel zur Verminderung der Wahrscheinlichkeit vorgesehen sind, wenn die Anzahl der benötigten Zeitschlitze einen vorgegebenen Grenzwert überschreiten würde.

10. Zentraleinheit zum Bereitstellen von Zeitschlitzen in einem Rahmen für die Übertragung von Informationen in einem System mit mobilen Einheiten, wobei der Rahmen mindestens einen zeitschlitz aufweist, der für die Übertragung von Informationen von den mobilen Einheiten zu der Zentraleinheit vorgesehen ist, und in den mehrere der mobilen Einheiten gleichzeitig Informationen zur Übertragung einschreiben können, **dadurch gekennzeichnet, dass** in der Zentraleinheit Mittel zur Erkennung einer Kollision von Informationen verschiedener mobiler Einheiten in demselben Zeitschlitz vorhanden sind, dass in der Zentraleinheit Mittel zur Erhöhung der Anzahl dieser Zeitschlitze nach einer erkannten Kollision vorhanden sind, dass in der Zentraleinheit Mittel zur Festlegung einer Wahrscheinlichkeit vorhanden sind, mit der eine mobile Einheit auf einen der Zeitschlitze zugreifen darf, und dass in der Zentraleinheit Mittel zur Verminderung der Wahrscheinlichkeit vorgesehen sind, wenn die Anzahl der benötigtan Zeitschlitze einen vorgegebenen Grenzwert überschreiten würde.

11. System oder Zentraleinheit nach Anspruch 9 oder 10, **dadurch gekennzeichnet, dass** ein spurgeführtes Transportsystem vorgesehen ist, das mit einem als Leckwellenleiter ausgebildeten schienensystem versehen ist.

## Claims

1. Method of providing time slots in a frame for the transmission of pieces of information, to control an industrial materials-handling system having mobile units and having a central unit, the frame having at least one time slot which is intended for the transmission of pieces of information from the mobile units to the central unit, to which time slot a plurality of the mobile units are able simultaneously to write pieces of information for transmission, **characterised in that** a collision of pieces of information from different mobile units in the same time slot is detected, **in that** the number of such time slots is increased on a collision being detected, **in that** a probability is laid down with which a mobile unit is permitted to access one of the time slots, and **in that** the probability is reduced if the number of time slots required would exceed a preset limiting value.

2. Method according to claim 1, **characterised in that** the number of time slots which a plurality of mobile units are able to access is maintained to conform to the limiting value provided the probability is less than one.

3. Method according to either of claims 1 and 2, **characterised in that** the number of successful transmissions of pieces of information in the time slots is detected, and **in that** the probability is reduced if a first condition is met which takes account of the sum of collisions detected and successful transmissions detected.

4. Method according to claim 3, **characterised in that** the probability is increased if the sum of collisions detected and successful transmissions detected meets a second condition which is preset.

5. Method according to one of the preceding claims in which the pieces of information have different priorities assigned to them, **characterised in that** time slots in the frame are made available for the different priorities in succession and independently of one another.

6. Method according to claim 5, **characterised in that** at least one time slot is provided for pieces of information of a given priority if there is a time slot for pieces of information of a lower priority present in the frame.

7. Method according to either of claims 5 and 6, **characterised in that** the number of time slots for pieces of information of a given priority is set to a preset value when this priority has not occurred for a protracted period.

8. Control element, and in particular a flash memory or read-only memory, for a control unit of one of the mobile units or of the central unit, on which control element a program is stored which can be run on a computing unit and in particular on a microprocessor and which is suitable for performing the individual steps of a method according to one of claims 1 to 7.

9. System for providing time slots in a frame for the transmission of pieces of information, having mobile units and having a central unit, the frame having at least one time slot which is intended for the transmission of pieces of information from the mobile units to the central unit, to which time slot a plurality of the mobile units are able simultaneously to write pieces of information for transmission, **characterised in that** means are present for detecting a collision of pieces of information from different mobile units in the same time slot, **in that** means are present for increasing the number of such time slots on a collision being detected, **in that** means are present for laying down a probability with which a mobile unit is permitted to access one of the time slots, and **in that** means are present to reduce the probability if the number of time slots required would exceed a preset limiting value.

10. Central unit for providing time slots in a frame for the transmission of pieces of information, in a system having mobile units, the frame having at least one time slot which is intended for the transmission of pieces of information from the mobile units to the central unit, to which time slot a plurality of the mobile units are able simultaneously to write pieces of information for transmission, **characterised in that** means for detecting a collision of pieces of information from different mobile units in the same time slot are provided in the central unit, **in that** means for increasing the number of such time slots on a collision being detected are provided in the central unit, **in that** means for laying down a probability with which a mobile unit is permitted to access one of the time slots are provided in the central unit, and **in that** means to reduce the probability if the number of time slots required would exceed a preset limiting value are provided in the central unit.

11. System or central unit according to claim 9 or 10, **characterised in that** a track-borne materials-handling system is provided which is provided with a rail system in the form of a leaky waveguide.

## Revendications

1. Procédé pour la préparation d'intervalles temporels dans un cadre pour la transmission d'informations pour commander un système de transport industriel, comprenant des unités mobiles et une unité centrale, le cadre présentant au moins un intervalle temporel destiné à la transmission d'informations depuis les unités mobiles vers l'unité centrale et dans lequel plusieurs de ces unités mobiles peuvent inscrire simultanément des informations pour la transmission, **caractérisé en ce qu'**une collision d'informations provenant de différentes unités mobiles dans le même intervalle temporel est détectée, **en ce que**, après une collision détectée, le nombre de ces intervalles temporels est augmenté, **en ce qu'**il est défini une probabilité avec laquelle une unité mobile peut accéder à l'un des intervalles temporels et **en ce que** la probabilité est diminuée lorsque le nombre d'intervalles temporels nécessaires dépasse une valeur limite déterminée.

2. Procédé selon la revendication 1, **caractérisé en ce que** le nombre d'intervalles temporels auxquels peuvent accéder les différentes unités mobiles est maintenu conformément à la valeur limite, tant que la probabilité est inférieure à un.

3. Procédé selon l'une des revendications 1 ou 2, **caractérisé en ce que** l'on enregistre le nombre de transmissions d'informations réussies dans les intervalles temporels et **en ce que** l'on réduit la probabilité lorsqu'une première condition est remplie, laquelle condition prend en considération la somme des collisions détectées et des transmissions réussies détectées.

4. Procédé selon la revendication 3, **caractérisé en ce que** la probabilité est augmentée lorsque la somme des collisions détectées et des transmissions réussies détectées remplit une deuxième condition prédéterminée.

5. Procédé selon l'une des revendications précédentes, dans lequel il est attribué aux informations différentes priorités, **caractérisé en ce qu'**il est mis à disposition des différentes priorités dans le cadre des intervalles temporels successifs et indépendants les uns des autres.

6. Procédé selon la revendication 5, **caractérisé en ce que** pour les informations d'une certaine priorité il est préparé au moins un intervalle temporel, lorsque dans le cadre il y a un intervalle temporel pour les informations de priorité inférieure.

7. Procédé selon l'une des revendications 5 ou 6, **caractérisé en ce que** le nombre d'intervalles temporels pour les informations d'une certaine priorité est fixé à une valeur prédéterminée lorsque cette priorité n'est plus apparue pendant un laps de temps plus long.

**8.** Elément de commande, en particulier mémoire flash ou mémoire à lecture seule (ROM), pour un appareil de commande de l'une des unités mobiles ou de l'unité centrale, sur lequel il est mémorisé un programme adapté à un appareil de calcul, en particulier à un microprocesseur, exécutable pour la réalisation des différentes étapes d'un procédé selon l'une des revendications 1 à 7.

**9.** Système pour la préparation d'intervalles temporels dans un cadre pour la transmission d'informations, comprenant des unités mobiles et une unité centrale, le cadre présentant au moins un intervalle temporel prévu pour la transmission d'informations depuis les unités mobiles vers l'unité centrale et dans lequel plusieurs de ces unités mobiles peuvent inscrire simultanément des informations pour la transmission, **caractérisé en ce qu'**il est prévu des moyens pour détecter une collision d'informations provenant d'unités mobiles différentes dans le même intervalle temporel, **en ce qu'**il est prévu des moyens pour augmenter le nombre de ces intervalles temporels suite à une collision détectée, **en ce qu'**il est prévu des moyens pour déterminer la probabilité avec laquelle une unité mobile peut accéder à l'un des intervalles temporels et **en ce qu'**il est prévu des moyens pour réduire la probabilité lorsque le nombre d'intervalles nécessaires dépasse une valeur limite prédéterminée.

**10.** Unité centrale pour la préparation d'intervalles temporels dans un cadre pour la transmission d'informations dans un système comprenant des unités mobiles, le cadre présentant au moins un intervalle temporel prévu pour la transmission d'informations depuis les unités mobiles vers l'unité centrale et dans lequel plusieurs de ces unités mobiles peuvent inscrire simultanément des informations pour la transmission, **caractérisée en ce que**, dans l'unité centrale, il est prévu des moyens pour détecter une collision d'informations provenant d'unités mobiles différentes dans le même intervalle temporel, **en ce que** dans l'unité centrale il est prévu des moyens pour augmenter le nombre de ces intervalle temporels à la suite d'une collision détectée, **en ce que** dans l'unité centrale il est prévu des moyens pour déterminer la probabilité avec laquelle une unité mobile peut accéder à l'un de ces intervalles temporels et **en ce que** dans l'unité centrale il est prévu des moyens pour réduire la probabilité lorsque le nombre des intervalles temporels nécessaires dépasse une valeur limite prédéterminée.

**11.** Système ou unité centrale selon la revendication 9 ou 10, **caractérisé en ce qu'**il est prévu un système de transport guidé muni d'un système à rails conçu à la manière d'un guide d'ondes à fuite.

Downlink

Uplink

P0 | P1 | P2|P3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5886993 A